# EUROPEAN PATENT APPLICATION

(11) **EP 1 768 042 A1**
(43) Date of publication of application: **28.03.2007**
(21) Application number: 05019446.3
(22) Date of filing: 07.09.2005
(51) Int. Cl.: G06F 21/00

(54) **Program encryption method**

(71) Applicant: Moxa Technologies Co., Ltd., Shing Tien City, Taipei Hsien (TW)
(72) Inventor: Yu, Sheng-Yi, Taipei City (TW)
(74) Representative: Glawe, Delfs, Moll

(57) **Abstract**

Disclosed is a program encryption method, which sets a key in an application program, and the application program is designed by a designer who uses an embedded Linux system as a platform, and the key is writeable but not readable by the application program, but a Linux kernel of the embedded Linux system can read the key and then code and compile the application program into an execute file. A file header is added in the execute file of the application program according to the key and a predefined conversion table, and contents of the file header performs a computation to disrupt contents of the execute file so as to protect the application program from being copied by users, and thus designers can feel ease to use the embedded Linux system to develop application programs.

## Description

### BACKGROUND OF THE INVENTION

### 1. Field of the Invention

The present invention relates to a program encryption method, and more particularly to a method of designing an application program encryption that uses an Embedded Linux System as a platform to prevent users from copying the application program.

### 2. Description of Related Art

According to the definition of the Institute of Electrical Engineers (IEE), an "Embedded System" is a control, monitoring, or accessory equipment, machine, or even factory-operating device, and the embedded system is integrated with a computer software and hardware that can meet the "Custom-made" principle. In other words, it is a system developed according to a certain specific application. Since the embedded system can enhance the stability and portabiliy of a product, lower the cost, and add specific functions, etc, therefore the embedded system is extensively used. At present, the common embedded operating system includes VxWORK, QNX, Palm OS, Windows CE, and Linux, etc, and the embedded Linux system has an advantage of free license, and thus the embedded Linux system is used by most users.

After an embedded Linux system designer obtains a device supplied by a device supplier, the designer will use the embedded Linux system as a platform to design an application program for the device, and then sell the device to end users. Since most software in the embedded Linux System are readable, therefore when the designer uses the embedded Linux system to design the application program, a user just needs to logon the system and the user can copy the application program easily. Such the application programs can be misappropriated easily by similar or same devices. Therefore, end users can directly purchase the device from the device supplier instead of the designer, and then copy the application program into the device. In this case, the designers lose their rights and benefits. As a result, most designers abandon the embedded Linux system and use a dedicated operating system instead. The embedded Linux system designers waste money and time, and cannot prevent their programs from being misappropriated.

It is an object of this invention to provide an encryption that lessens this drawback.

### SUMMARY OF THE INVENTION

The present invention has been accomplished under the circumstances in view. The solution according to the invention lies in the features of the independent claims and preferably in those of the dependent claims.

It is the gist of the present invention to use a KEY and a predefined conversion table to add a file header in an application program that adopt an embedded Linux system as a platform for the design. All contents of the file header are computed to disrupt contents of an execution file to protect the application program from being copied. Therefore, a designer can use the embedded Linux system to develop application programs without worrying about the misappropriation.

### BRIEF DESCRIPTION OF THE DRAWINGS

Fig. 1 is a flow chart of a designer using the technology of the present invention;
Fig. 2 is a flow chart of performing a decryption according to the present invention; and
Fig. 3 is a flow chart of adding a file header and performing an encryption according to the present invention.

### DETAILED DESCRIPTION OF THE PREFERRED EMBODIMENTS

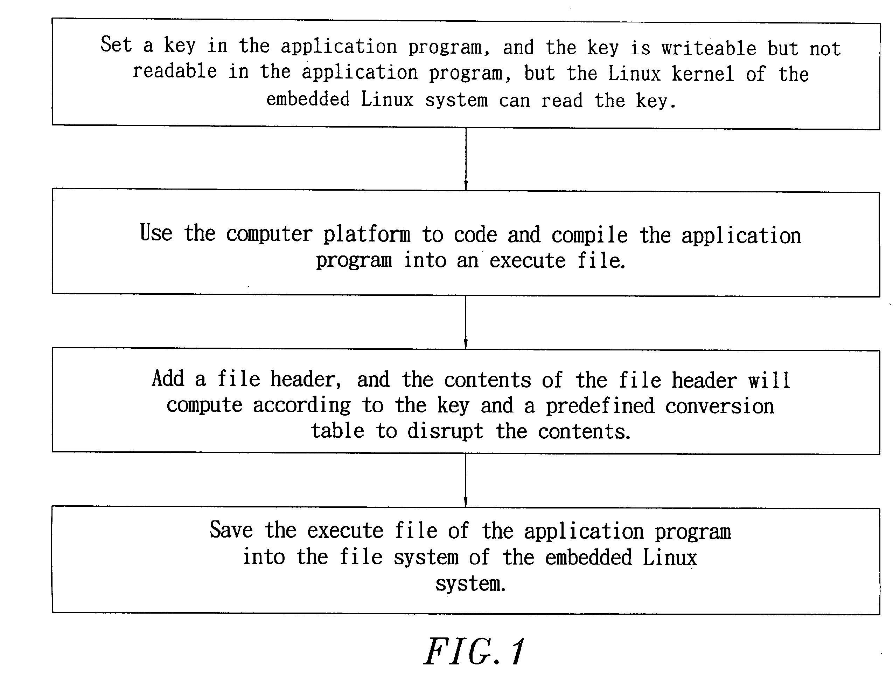

Referring to Fig. 1, a designer uses an embedded Linux system as a platform to design an application program and set a KEY. The KEY is writeable but not readable in the application program, but a Linux kernel of the embedded Linux system can read the KEY, and uses a computer platform to code the application program to convert an input message sequence into a coding sequence, and compile the application program by a compiler that interprets a source program into an execute program to form an execute file, and add a file header in the execute file of the application program. All contents of the file header are computed according to the KEY and a predefined conversion table and disrupted. Finally, the execute file of the application program is saved into a file system of the embedded Linux system.

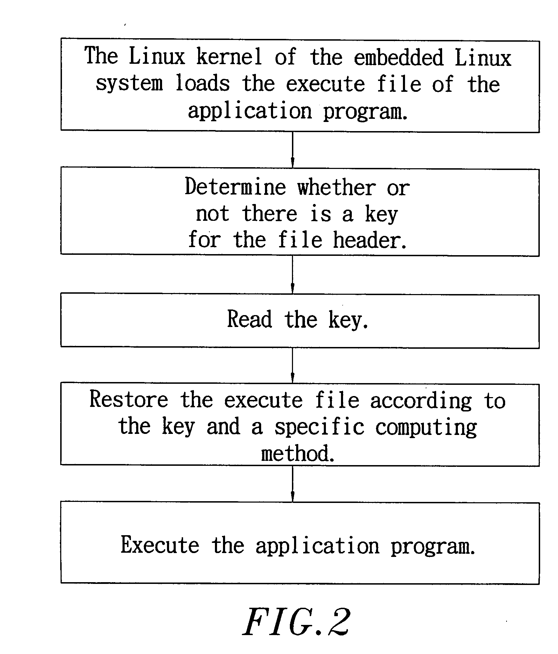

When a device executes the application program with the encryption (as shown in Fig. 2), the Linux kernel of the embedded Linux system will load the execute file of the application program and determine whether or not the file header with the KEY is available; if no, then execute the application program; if yes, then restore the execute file according to the KEY and a specific computation and finally execute the application program. Since the KEY in the application program is writeable but not readable, therefore if a user uses a copied application program or adds a wrong KEY, the execute file is restored into an incorrect application program or the execute file cannot be restored at all. As a result, the copied application program cannot be executed.

Further, the Linux kernel of the embedded Linux system can add a loader of the executable file to determine whether or not a restoration is needed; if yes, then read the KEY in the execute file and restore the execute file according to the KEY; if no, then execute the application program directly, so that a designer can select which application program needs to add the KEY.

Further, in the design of the embedded Linux system, a computer is often used for cross development. Therefore, software can be designed in advance and stored for the foregoing conversion.

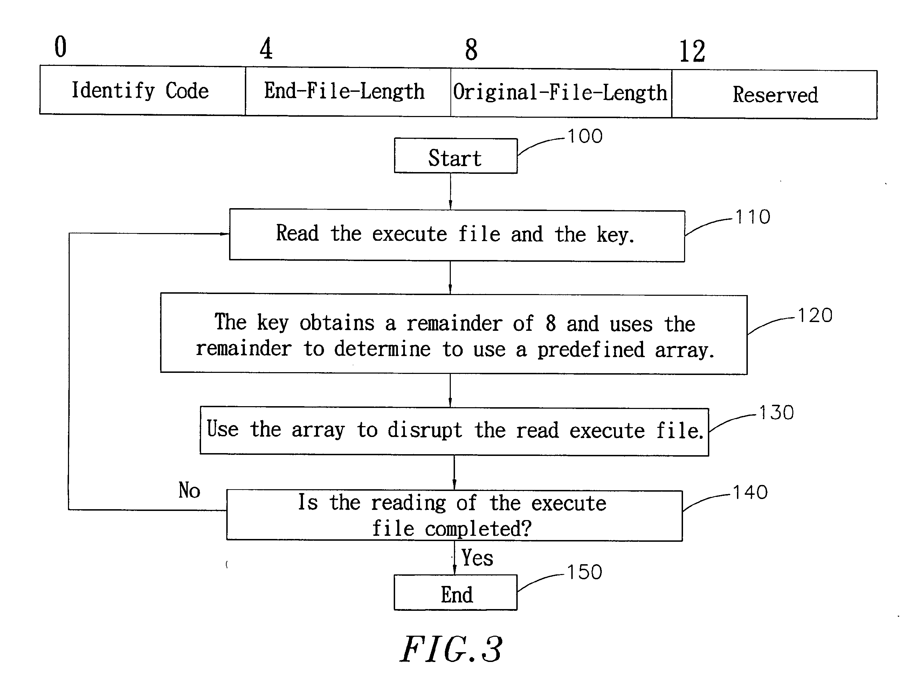

Referring to Fig. 3, the file header is divided into four sections: an identify code, an end-file-length, an original-file-length, and a reserved. A matrix of 128 elements is predefined, and contents form the conversion table for disrupting the application program, and the 128 elements are not repeatable and have a value of 0~127. Then, the 128 elements are divided into 8 different array tables and processed as follows:
(100) start.
(110) read the execute file and the KEY, and the execute file reads 128 bits for a time; if the number of bit is not up to 128, then fill in "0" to make up the 128 bits.
(120) obtain remainders of 8 by the key, and the remainders determine which predefined array to be used.
(130) use the selected array to disrupt the read execute file.
(140) check whether or not reading of execute file is completed; if yes, execute Step (150), or else execute Step (110).
(150) end.

The foregoing process can disrupt the sequence of the execute file, and prevent any unauthorized use of the application program by users who have no KEY or an incorrect KEY.

## Claims

1. A program encryption method, comprising the steps of:
(I) setting a KEY readable by a Linux kernel of an embedded Linux system in an application program that is designed by a designer using said embedded Linux system as a platform, and said key is writeable but not readable in said application program;
(II) coding and compiling said application program to make said application program as an execute file;
(III) adding a file header in said execute file of said application program, and all contents of said file header are computed according to said KEY and a predefined conversion table to disrupt said contents of said application program and saved into a file system of said embedded Linux system, and when a user executes said execute file, said Linux kernel of said embedded Linux system will load said execute file of said application program and determine whether or not there is said KEY; if yes, then restore said execute file according to said KEY and a specific computation and execute said application program.

2. The program encryption method as claimed in claim 1, wherein said execute file will not be restored and cannot be executed if said Linux kernel of said embedded Linux system determines that there is no key existence.

3. The program encryption method as claimed in claim 1, wherein said Linux kernel of said embedded Linux system can add a loader of said executable file to determine whether or not to execute restore.

4. The program encryption method as claimed in claim 1, wherein said file header is divided into four sections including an identify code, an end-file-length, an original-file-length, and a reserved.

5. The program encryption method as claimed in claim 1, wherein said predefined conversion table is a matrix having 128 elements, and contents of said 128 elements cannot be repeated and must have a value of 0-127, which are divided into 8 different array table.

6. The program encryption method of claims 1, wherein said application program is disrupted by a process comprising the steps of:
(A) starting;
(B) reading said execute file and said KEY, and said execute file reading 128 bits at a time; if the number of bits is not up to 128, then fill "0" until the number of bits is equal to 128;
(C) said key reading a remainder of 8 and determining to use a predefined array according to said remainder;
(D) using said array to disrupt said read execute file;
(E) checking whether or not the reading of said execute file is completed; if yes, then execute Step (F); if no, then execute Step (B); and
(F) ending.

7. The program encryption method of claims 5, wherein said application program is disrupted by a process comprising the steps of:
(A) starting;
(B) reading said execute file and said KEY, and said execute file reading 128 bits at a time; if the number of bits is not up to 128, then fill "0" until the number of bits is equal to 128;
(C) said key reading a remainder of 8 and determining to use a predefined array according to said remainder;
(D) using said array to disrupt said read execute file;
(E) checking whether or not the reading of said execute file is completed; if yes, then execute Step (F); if no, then execute Step (B); and
(F) ending.

8. An embedded system comprising a processor and a memory with an operating system
**characterized in that**
it further comprises an encryption module which is configured to execute the steps of:
(I) setting a KEY readable by a Linux kernel of an embedded Linux system in an application program that is designed by a designer using said embedded Linux system as a platform, and said key is writeable but not readable in said application program;
(II) coding and compiling said application program to make said application program as an execute file;
(III) adding a file header in said execute file of said application program, and all contents of said file header are computed according to said KEY and a predefined conversion table to disrupt said contents of said application program and saved into a file system of said embedded Linux system, and when a user executes said execute file, said Linux kernel of said embedded Linux system will load said execute file of said application program and determine whether or not there is said KEY; if yes, then restore said execute file according to said KEY and a specific computation and execute said application program.
